# EUROPEAN PATENT SPECIFICATION

(11) **EP 3 260 230 B1**
(45) Date of publication and mention of the grant of the patent: **03.03.2021**
(21) Application number: 16752157.4
(22) Date of filing: 12.01.2016
(51) Int. Cl.: B23K 20/12, B23K 20/233, B23K 103/18

(54) **JOINING METHOD AND METHOD FOR MANUFACTURING COMPOSITE ROLLED MATERIAL**
VERBINDUNGSVERFAHREN UND VERFAHREN ZUR HERSTELLUNG EINES VERBUNDSTOFFWALZMATERIALS
PROCÉDÉ D'ASSEMBLAGE ET PROCÉDÉ DE FABRICATION D'UN MATÉRIAU LAMINÉ COMPOSITE

(30) Priority: 19.02.2015 JP 2015030604
(43) Date of publication of application: 27.12.2017
(73) Proprietor: Nippon Light Metal Company, Ltd., Tokyo 140-8628 (JP)
(72) Inventor: HORI Hisashi, Shizuoka-shi Shizuoka 421-3203 (JP)
(74) Representative: Reichert & Lindner Partnerschaft Patentanwälte
(86) International application number: PCT/JP2016/050627
(87) International publication number: WO 2016/132768

(56) References cited:
- EP-A2- 1 279 458
- JP-A- H10 328 855
- JP-A- H10 328 855
- JP-A- 2001 001 165
- JP-A- 2003 039 183
- JP-A- 2007 283 379
- JP-A- 2010 036 230
- JP-A- 2010 036 230
- JP-A- 2010 201 484

## Description

### TECHNICAL FIELD

The present invention relates to a method of joining a pair of metal members made of different materials by using a rotary tool according to the preamble of claim 1.

### BACKGROUND ART

For example, in a patent document 1, there is disclosed a technique that friction stir welding is performed to a couple of metal members whose materials are different from each other by using a rotary tool. In conventional friction stir welding, a stirring pin of a rotary tool is inserted into a butting interface so that a lower end face of a shoulder portion is inserted into the couple of metal members by around several millimeters, and the rotary tool is moved along the butting interface.

### PRIOR ART DOCUMENT

### PATENT DOCUMENTS

Patent document 1: JP2002-66765 A discloses that a joining method includes a process which butts a pair of metal members 1 and 2 having different melting points along the edges of both, and a process which conducts the friction stirring joining of the both members 1 and 2 by advancing a probe 14 protruding from the bottom face 13 of the rotating main body 12 of the joining tool 10 along the butting joint surface 4 of the pair of metal members 1 and 2. In the joining process, the metal (aluminum) member 2 having a lower melting point of the pair of the metallic members 1 and 2 is arranged on a side where a rotational direction of the joining tool 10 becomes opposite to an advancing direction of the joining tool 10 along the butting joint surface 4 in plan view.

Patent document 2: JP 2010-036230 A discloses a joining method of joining a pair of metal members (bonding materials) made of different materials by using a rotary tool (friction stir tool) provided with a shoulder portion with a relatively large diameter and a stirring pin (taper pin) having a diameter becoming smaller toward an extremity of the stirring pin. During the joining process, the shoulder portion moves on the upper surfaces of the two metal members, particularly on the upper surface of the metal member into which the stirring pin is not inserted. The angle between the lower surface of the shoulder portion of the rotary tool and the inclined circumference surface of the conical stirring pin of the rotary tool on one hand and, correspondingly to that, the angle between the upper surface of the metal members and the inclined inner surfaces of the metal members at the butting interface are determined on the basis of a stress specificity dissipation range obtained from the stress specificity analysis of the ends of the joining interface of dissimilar materials with respect to the end face of the friction stirring tool.

Patent document 3: EP 1279458 A2 (basis for the preamble of claim 1) discloses a joining method of joining a pair of metal members made of different materials by using a rotary tool provided with a shoulder portion with a relatively large diameter and a stirring pin (pin portion) having a diameter becoming smaller toward an extremity of the stirring pin. During the joining process, the shoulder portion moves on the upper surfaces of the two metal members, particularly on the upper surface of the metal member into which the stirring pin is not inserted.

Patent document 4: JPH10-328855 A discloses that a joining device 3 provided with the rotor 30 having a large diameter and the probe 32 protruding from one end surface in the axial direction of the rotor is used, two conductive members 1, 2 consisting of different kinds of metals are arranged so as to be adjacent to each other at the joining position, the rotating probe 32 is inserted into the joining part or its vicinity, and the part coming into contact with the probe 32 is soften with frictional heat and agitated, whereby two conductive members 1, 2 are joined and the conductive joined body is manufactured.

Patent document 5: JP2001-001165 A discloses that two plate members 1 and 2 are arranged in parallel with each other with a spacing 3 of (x1+x2) in a direction of a width so that the product manufactured by a friction stir joining method has a prescribed dimension of width W. A friction stir joining work is carried out to the spaced part 3 in the foresaid state to join the two plate members 1 and 2 in the direction of the width, thus by the friction stir joining, the product having the prescribed dimension of width W can be manufactured.

### SUMMARY OF THE INVENTION

### PROBLEMS TO BE SOLVED BY THE INVENTION

When conventional friction stir welding is performed, friction stirring is performed to a butting interface between a couple of metal members with a stirring pin and a shoulder portion of a rotary tool. However, in a case where a difference in the softening temperatures of the metal members is large, it is difficult to properly join the metal members at the butting interface.

When friction stir welding is performed to a butting interface of a couple of metal members having softening temperatures different from each other, it is generally necessary to increase an amount of input-heat so that a metal member having a higher softening temperature is softened by controlling joining conditions. For example, in a case where friction stir welding is performed to a butting interface of an aluminum alloy member and a copper alloy member, it is necessary to increase an amount of input-heat so that the copper alloy member is softened by controlling joining conditions because the softening temperature of the copper alloy member is higher than that of the aluminum alloy member. Thus, when friction stirring is performed to an aluminum alloy member and a copper alloy member on joining conditions to generate a large amount of input-heat, an area of a boundary face between the aluminum alloy member and the copper alloy member increases, and a mutual diffusion through the boundary face between the aluminum alloy member and the copper alloy member occurs, so that an Al-Cu phase becomes a liquid phase and many burrs are generated on the joining portion. Therefore, the joining becomes poor. Furthermore, since the copper alloy member is not softened enough on joining conditions to generate a small amount of input-heat, a frictional resistance between the rotary tool and the copper alloy member becomes large. Thus, a load applied on the rotary tool and a friction stir device increases to make the joining difficult.

In a case where friction stir welding is performed on joining conditions to generate a large amount of input-heat, if a shoulder portion of a rotary tool comes into contact with a couple of different metal members, the amount of input-heat becomes larger. Therefore, the temperature of these members further rises, so that many burrs are generated on the joining portion. Consequently, there is a risk that a joining defect is caused. Furthermore, in a case where friction stir welding is performed on joining conditions to generate a small amount of input-heat, when the shoulder portion of the rotary tool comes into contact with a couple of different metal members, a frictional resistance becomes larger. Thus, the load applied on the friction stir device increases as stated above, so that there is a risk that a joining becomes difficult.

By the way, since it is reasonable to assume that a softening temperature (K) of a metal member is approximately proportional to a melting temperature (K) of the metal member, in this specification, a metal member having a high softening temperature is defined as a metal member having a high melting temperature, and a metal member having a low softening temperature is defined as a metal member having a low melting temperature.

From such a view point, it is an object of the present invention to provide a method of joining a pair of metal members made of different materials by using a rotary tool and a method of manufacturing a composite rolled material, which are capable of suitably joining different sorts of metal members.

### MEANS FOR SOLVING THE PROBLEM

A method of joining a pair of metal members made of different materials by using a rotary tool according to the present invention is defined in claim 1, comprising:
a preparatory step of preparing
   a first metal member having a first upper surface, a first lower surface, and a first inclined surface connecting the first upper surface and the first lower surface, and
   a second metal member having a second upper surface, a second lower surface, and a second inclined surface connecting the second upper surface and the second lower surface, the second metal member having a higher melting temperature than the first metal member;
a butting step of forming a butting interface by butting the first inclined surface and the second inclined surface against each other in such a manner that a first upper intersecting line formed by the first upper surface and the first inclined surface is positioned further in a direction of the second metal member than a first lower intersecting line formed by the first lower surface and the first inclined surface, and a second lower intersecting line formed by the second lower surface and the second inclined surface is positioned further in a direction of the first metal member than a second upper intersecting line formed by the second upper surface and the second inclined surface; and
a joining step of joining the first metal member and the second metal member by moving the rotary tool along the butting interface while the rotary tool being rotated is inserted only from the first upper surface and only the stirring pin is in contact with at least the first metal member.

Further embodiments of the present invention are defined in the dependent claims, in particular a method of manufacturing a composite rolled material, see claim 3.

According to such a manufacturing method, since a shoulder portion of the rotary tool does not come into contact with the first metal member nor the second metal member, an amount of input-heat into the first metal member and the second metal member can be kept lower. Furthermore, if the rotary tool is inserted so that the rotary tool comes into contact with only the first metal member, joining conditions can be controlled to match the first metal member having a low softening temperature, thereby the amount of input-heat can be kept lower. Therefore, excessive burrs can be restrained from being generated due to a large softening of the first metal member. Thus a joining defect according to a shortage of metal material can be prevented from being caused.

Furthermore, since a shoulder portion of the rotary tool does not come into contact with the first metal member nor the second metal member, a frictional resistance can be reduced, so that a load applied on the rotary tool and the friction stir device can be reduced. Furthermore, since the shoulder portion of the rotary tool does not come into contact with the first metal member nor the second metal member, a temperature of the rotary tool can be prevented from becoming high. Thereby, a material of the rotary tool can be easily selected, and a lifetime of the rotary tool can be lengthened.

According to the present invention, a rotational direction and a moving direction of the rotary tool are set so that a second metal member side of a plasticized region to be formed along a moving locus of the rotary tool is a shear side, and a first metal member side of the plasticized region is a flow side.

If in the plasticized region, the second metal member side having a high melting temperature is a flow side, the temperature of the first metal member in the butting interface is lowered, so that a mutual diffusion through a boundary face between different metal members is not promoted. Thus there is a risk that a joining defect is caused. However according to such a manufacturing method, by setting the second metal member side having a high melting temperature to be a shear side, a temperature of the first metal member in the butting interface can be kept relatively high, a mutual diffusion through the boundary face between different metal members is promoted, and an insufficient joining can be prevented from being caused.

Note that, a shear side is a side where a relative speed of the outer peripheral surface of the rotary tool to the joining portion is a speed obtained by adding a feed speed (moving speed) and a tangential speed of the outer peripheral surface of the rotary tool. A flow side is a side where a relative speed of the outer peripheral surface of the rotary tool to the joining portion is a speed obtained by subtracting the feed speed from the tangential speed of the outer peripheral surface of the rotary tool.

According to the invention, the first metal member is made of aluminum or an aluminum alloy and the second metal member is made of copper or a copper alloy, and that in the joining step, the first metal member and the second metal member are joined by moving the rotary tool along the butting interface while the rotary tool being rotated is inserted into the first metal member from only the first upper surface and only the stirring pin is in contact with only the first metal member. According to this joining method, a metal member made of copper or a copper alloy and a metal member made of aluminum or an aluminum alloy can be suitably joined.

It is preferable that the rotary tool is rotated in a clockwise direction in a case where the rotary tool has a spiral groove on an outer peripheral surface of the rotary tool, which spiral groove is formed spirally in a counterclockwise direction from the base end toward the front end, and is rotated in the counterclockwise direction in a case where the rotary tool has a spiral groove on the outer peripheral surface of the rotary tool, which spiral groove is formed spirally in the clockwise direction from the base end toward the front end.

According to the above joining method, burrs can be prevented from being generated since plastically fluidized metal is led along the spiral groove to flow toward the front end of the rotary tool.

### BRIEF DESCRIPTION OF THE DRAWINGS

FIG. 1A is a side view showing a rotary tool of a present embodiment;
FIG. 1B is a schematic cross sectional view showing a joining state being performed by the rotary tool;
FIG. 2A is a side view showing a preliminary step of the present embodiment;
FIG. 2B is a side view showing a butting step of the present embodiment;
FIG. 2C is a perspective view showing a joining step of the present embodiment;
FIG. 3 is a cross sectional view showing the joining step of the present embodiment;
FIG. 4 is a cross sectional view showing a state of having finished the joining step of the present embodiment;
FIG. 5 is a perspective view showing a rolling step of the present embodiment;
FIG. 6 is a cross sectional view showing a composite rolled material of the present embodiment;
FIG. 7A is a perspective view showing a joining step according to a modified embodiment;
FIG. 7B is a cross sectional view taken along the line I-I of FIG. 7A and showing the joining step according to the modified embodiment;
FIG. 8A is a table showing results of a test 1;
FIG. 8B is a plan view of test pieces 1-1, 1-3 and 1-4;
FIG. 8C is a plan view of test pieces 1-5, 1-7 and 1-8;
FIG. 9A is a cross sectional view of the test piece 1-7 showing a state of having finished a joining step of the test 1;
FIG. 9B is a cross sectional view of a test piece 1-11 showing a state of having finished the joining step of the test 1;
FIG. 10A is a table showing results of a test 2;
FIG. 10B is a plan view of test pieces 2-1, 2-2 and 2-3;
FIG. 11A is a table showing results of a test 3;
FIG. 11B is a plan view of test pieces 3-1, 3-2 and 3-3;
FIG. 12A is a plan view of the test pieces 1-5, 1-7 and a test piece 1-6, showing a state of having finished the rolling step of a test 4;
FIG. 12B is a plan view of test pieces 1-9, 1-10 and the test piece 1-11, showing a state of having finished the rolling step of the test 4; and
FIG. 13 is a table showing results of the test 4.

### MODE FOR CARRYING OUT THE INVENTION

A method of manufacturing a composite rolled material according to an embodiment of the present invention will be described in detail with reference to the attached drawings. First, a rotary tool to be used in this embodiment will be described.

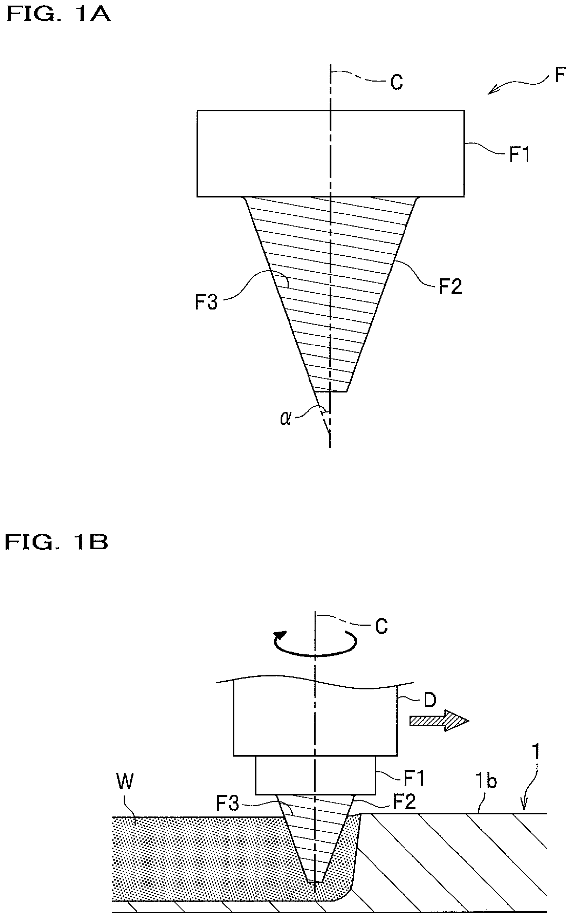

As shown in Figure 1A, the rotary tool F has a coupling part F1 and a stirring pin F2. The rotary tool F is made of, for example, tool steel. The coupling part F1 is a part to be coupled to a rotary shaft D of a friction stir device shown in Figure 1B. The coupling part F1 has a cylindrical shape, and has screw holes (not shown) for fastening bolts.

The stirring pin F2 extends vertically from the coupling part F1, and is coaxial with the coupling part F1. The stirring pin F2 has a tapered shape having a diameter becoming smaller from the coupling part F1 toward an extremity thereof. An inclination angle α in the side view is set to 20 degrees in this embodiment, which angle α is an angle between a vertical axis C and an outer peripheral surface of the stirring pin F2. The inclination angle α can be appropriately set in a range of 10 to 60 degrees. A case where the inclination angle α is less than 10 degrees is not preferable since it may happen that burrs are discharged from the outer peripheral surface of the stirring pin F2 to cause a joining defect when the joining is performed. A case where the inclination angle α is larger than 60 degrees is not preferable since a radius of the rotary tool F becomes too large, so that a load on the rotary tool F and the friction stir device becomes large.

The stirring pin F2 has a spiral groove F3 formed on the outer peripheral surface thereof. In this embodiment, the spiral groove F3 is formed spirally in a counterclockwise direction from a base end toward a front end thereof because the rotary tool F is rotated in the clockwise direction. In other words, the spiral groove F3 is formed so as to rotate in the counterclockwise direction in a view from above when the spiral groove F3 is traced from the base end toward the front end thereof.

Note that, in a case where the rotary tool F is rotated in the counterclockwise direction, it is preferable that the spiral groove F3 is formed spirally in the clockwise direction from the base end toward the front end. In other words, the spiral groove F3 of this case is formed so as to rotate in the clockwise direction in a view from above when the spiral groove F3 is traced from the base end toward the front end thereof. By forming the spiral groove F3 in such a manner, plastically fluidized metal is led toward a front end of the stirring pin F2 through the spiral groove F3 when friction stirring is performed. Thereby, an amount of metals to be leaked to the outside of metal members (a first metal member 1 and a second metal member 2 to be described later) to be joined together, can be reduced.

As shown in Figure 1B, when friction stirring is performed by using the rotary tool F, only the rotating stirring pin F2 is inserted into the metal members to be joined, and the rotary tool F is moved with the coupling part F1 kept away from the metal members to be joined. In other words, the friction stirring is performed while a base end portion of the stirring pin F2 is exposed. A plasticized region W is formed along a moving locus of the rotary tool F by cooling of metal to which friction stirring has been performed.

Next, a method of manufacturing a composite rolled material of this embodiment will be described. The method of manufacturing a composite rolled material according to this embodiment is a method where a pair of metal members are joined together by using the rotary tool F, then the joined metal members are rolled to obtain a composite rolled material.

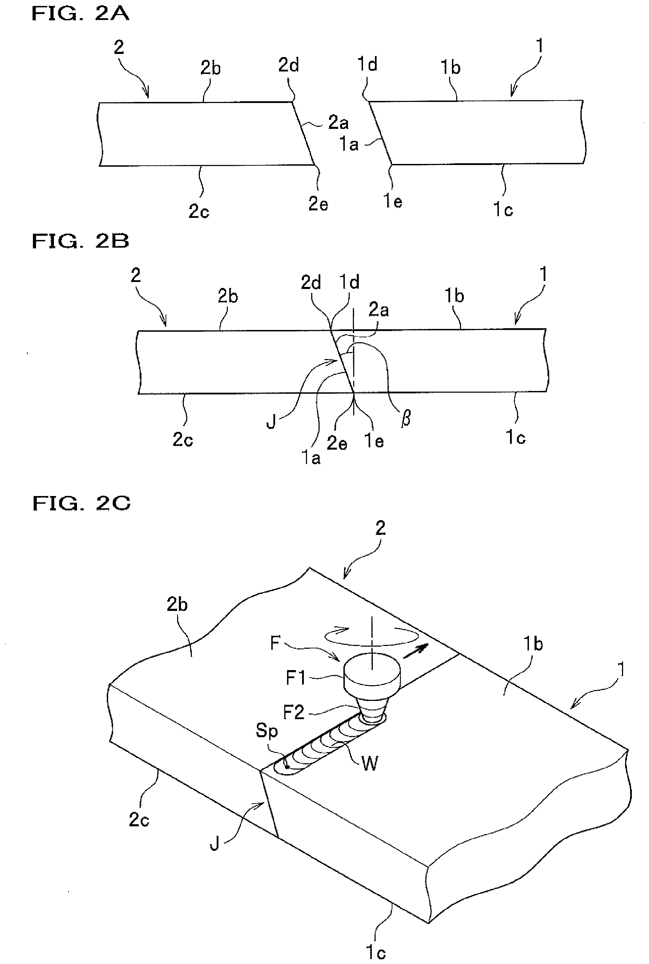

As shown in Figure 2A, the first metal member 1 has a plate-like shape. The first metal member 1 has a first upper surface 1b, a first lower surface 1c and a first slope surface 1a connecting the first upper surface 1b and the first lower surface 1c. The first metal member 1 according to the present invention is made of an aluminum alloy.

The second metal member 2 has a plate-like shape. The second metal member 2 has a second upper surface 2b, a second lower surface 2c and a second slope surface 2a connecting the second upper surface 2b and the second lower surface 2c. The second slope surface 2a is in parallel with the first slope surface 1a. The second metal member 2 has a higher melting temperature than the first metal member 1 and is made of a material capable of being friction stirred. The second metal member 2 according to the present invention is made of copper (Cu1020).

In the method of manufacturing a composite rolled material according to this embodiment, a preparatory step, a butting step, a joining step, and a rolling step are performed. Note that, the joining method claimed in the scope of claim for patent is a process which includes the preparatory step, the butting step and the joining step.

The preparatory step is a step for preparing the first metal member 1, the second metal member 2 and the rotary tool F which have been described in the foregoing.

As shown in Figure 2B, the butting step is a step for butting one end portion of the first metal member 1 and one end portion of the second metal member 2 against each other. In the butting step, a butting interface J, in which the first inclined surface 1a of the first metal member 1 and the second inclined surface 2a of the second metal member 2 are in surface contact with each other, is formed. Furthermore, the first upper surface 1b of the first metal member 1 and the second upper surface 2b of the second metal member 2 are flush with each other, and the first lower surface 1c of the first metal member 1 and the second lower surface 2c of the second metal member 2 are flush with each other.

In more detail, the butting interface J is formed by butting the first inclined surface 1a and the second inclined surface 2a against each other in the following manner. That is, in the butting step, in a case of a side view, a first upper intersecting line 1d which is formed with the first upper surface 1b and the first inclined surface 1a is positioned further in a direction of the opposite second metal member 2 in comparison with a first lower intersecting line 1e which is formed with the first lower surface 1c and the first inclined surface 1a, and a second lower intersecting line 2e which is formed with the second lower surface 2c and the second inclined surface 2a is positioned further in a direction of the opposite first metal member 1 in comparison with a second upper intersecting line 2d which is formed with the second upper surface 2b and the second inclined surface 2a.

An inclination angle β (an angle between the vertical axis C and butting surfaces (the opposite inclined surfaces)) is set to be 20 degrees in this embodiment. The inclination angle α (refer to Figure. 1A) of the outer peripheral surface of the stirring pin F2 is configured to be the same as the inclination angle β of the butting interface J. After the first metal member 1 and the second metal member 2 are butted against each other, the couple of members are secured to each other by using a clamp disposed on a work table not to move.

The joining step is a step for joining the first metal member 1 and the second metal member 2 together by using the rotary tool F. As shown in Figure 2C, in the joining step, while the stirring pin F2 of the rotary tool F is being rotated, the rotary tool F is inserted at a starting position Sp which is on the first upper surface 1b of the first metal member 1 and is set to be near the butting interface J. Then, the rotary tool F is moved in parallel with an extending direction of the butting interface J. The plasticized region W is formed along a moving locus of the rotary tool F.

The joining step is set so that in the plasticized region W, a second metal member 2 side (a part of the plasticized region near the second metal member 2, "side" is used like this hereinafter) becomes a shear side, and a first metal member 1 side (a region of the plasticized region far from the second metal member 2) becomes a flow side. That is, in the joining step according to this embodiment, the rotary tool F is rotated in the clockwise direction while the first metal member 1 is positioned on a right side with respect to the moving direction. Note that, in a state where the second metal member 2 is positioned on the right side with respect to the moving direction, the rotary tool F is rotated in the counterclockwise direction, so that the first metal member 1 side becomes a flow side.

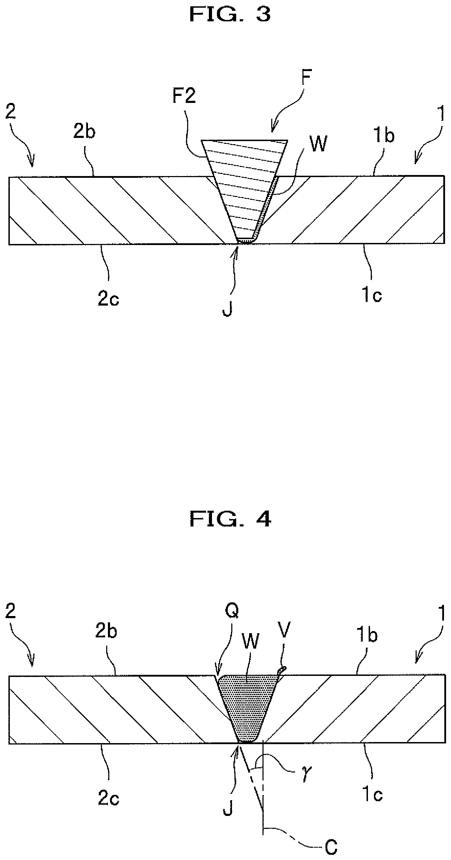

An insertion depth of the stirring pin F2 may be properly set. As shown in Figure 3, it is set to be a depth to be equal to around 90 % of a plate thickness of the first metal member 1 in this embodiment. Furthermore, in the joining step of this embodiment, the starting position Sp is set so that the rotary tool F does not come into contact with the second metal member 2, and the first metal member 1 and the second metal member 2 are joined together with diffusive joining caused by friction stirring.

When the outer peripheral surface of the rotary tool F and the second metal member 2 are far away from each other, the first metal member 1 and the second metal member 2 cannot be firmly joined together because the first metal member 1 and the second metal member 2 of the butting interface J do not diffuse to each other. On the other hand, when friction stirring is performed while the rotary tool F and the second metal member 2 are in contact with each other and an overlapping margin of both is large, it is necessary for an amount of input-heat to become large by controlling the joining conditions in order to soften the second metal member 2, so that an insufficient joining may be caused. Therefore, the joining is performed while the outer peripheral surface of the rotary tool F and the second metal member 2 are slightly in contact with each other or are extremely near without coming into contact with each other so that the first metal member 1 and the second metal member 2 of the butting interface J are diffusively joined. This aspect is not covered by the present invention.

According to the present invention, the first metal member 1 is made of an aluminum alloy and the second metal member 2 is made of copper. Thus, the joining is performed while the outer peripheral surface of the rotary tool F and the second metal member 2 (copper material) are kept spaced apart from each other and close to each other as much as possible without coming into contact with each other in the joining step. If the outer peripheral surface of the rotary tool F and the second metal member 2 (copper material) come into contact with each other on joining conditions of a large amount of input-heat, a small amount of copper material is stirred and mixed into the aluminum alloy member, and a mutual diffusion of an Al/Cu is promoted, so that an Al-Cu phase which is dispersed in the aluminum alloy member becomes a liquid phase . In the consequence, many burrs are generated from the aluminum alloy member side, so that an insufficient joining is caused.

As shown in Figure 4, burrs V are generated on an upper surface of the plasticized region W and a recessed portion Q is made along the butting interface J. An inclination angle γ of the plasticized region W is approximately the same as the inclination angle β of the butting interface J. The plasticized region W and the second metal member 2 are adjacent to each other. That is, the plasticized region W is not formed in the second metal member 2 which is in a region beyond the butting interface J. The recessed portion Q is a recessed groove to be made by overflowing of the metal when the friction stirring is performed. It is preferable that a burr cutting step for cutting the burrs V is performed after the joining step. Furthermore, a cutting step may be performed, which step is a step for removing the recessed portion Q by cutting the first upper surface 1b of the first metal member 1 and the second upper surface 2b of the second metal member 2 thin.

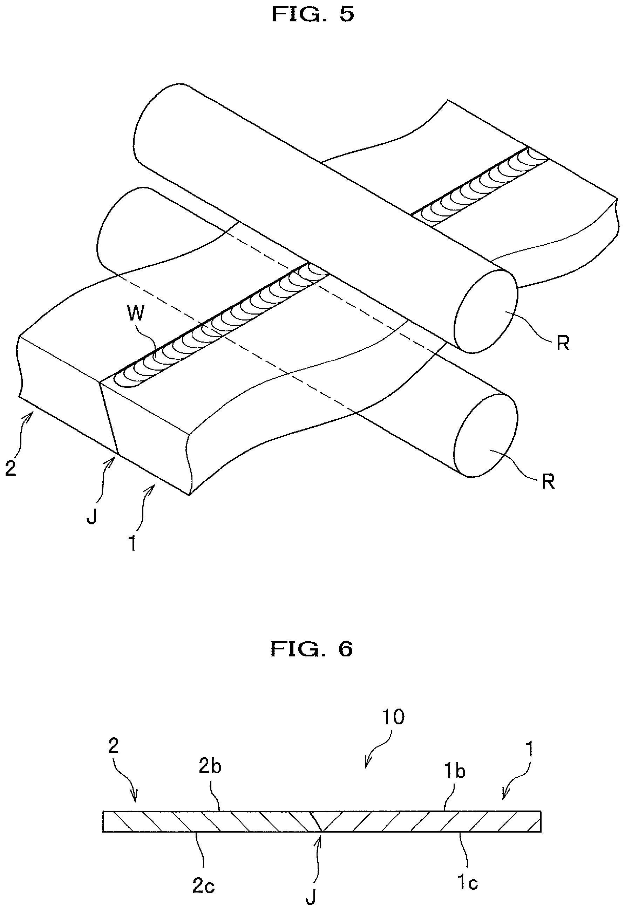

The rolling step is a step for rolling the first metal member 1 and the second metal member 2 which have been joined together. As shown in Figure 5, a cold rolling is performed by using a rolling apparatus provided with rollers R, R in the rolling step. In the rolling step, the rolling is performed by setting the joining line (the plasticized region W) of the joining step as a rolling direction. By the above, a composite rolled material 10 shown in Figure 6 is manufactured. A reduction rate in the rolling step may be appropriately set according to materials of the first metal member 1 and the second metal member 2 and/or a use of the composite rolled material 10.

According to the present invention, the shoulder portion does not come into contact with the first metal member 1 nor the second metal member 2 in the joining step, so that an amount of input-heat can become as small as possible and the frictional resistance can become small. Therefore, a load onto the rotary tool F and the friction stir device can be reduced. Furthermore, according to the present invention, the first metal member 1 is made of an aluminum alloy and the second metal member 2 is made of copper, the joining is performed while the outer peripheral surface of the rotary tool F and the second metal member 2 (copper member) are kept spaced apart from each other and close to each other as much as possible without coming into contact with each other in the joining step. By such a joining, burrs V are not generated excessively from the aluminum alloy member side, and a mutual diffusion between the first metal member 1 and the second metal member 2 is promoted on the butting interface J. Therefore, they are firmly joined together. Thus, an amount of input-heat which is entered into the first metal member 1 and the second metal member 2 can be reduced relative to the conventional case, and a load onto the rotary tool F and the friction stir device can be reduced. Furthermore, excessive generation of burrs V from the first metal member 1 side can be reduced. And furthermore, since the shoulder portion does not come into contact with the first metal member 1 nor the second metal member 2, the rotary tool F can be prevented from becoming a high temperature. Thereby, selecting a material for the rotary tool F can become easy, and a life of the rotary tool F can be prolonged.

In a case where the second metal member 2 having a high melting temperature, is on the flow side in the plasticized region W, the temperature of the first metal member 1 of the butting interface J lowers, so that a mutual diffusion through the boundary face between the different metals is not promoted. Therefore, an insufficient joining might be caused. So, if joining conditions are controlled so that an amount of input-heat becomes large, excess burrs are generated from the first metal member 1 side which is a shear side, so that a joining defect is caused. However, by setting the second metal member 2 side in the plasticized region W, which second metal member has a high temperature melting temperature, to be a shear side like this embodiment, it becomes possible that the temperature of the first metal member 1 of the butting interface J can be kept relatively high, so that a mutual diffusion through the boundary face between the different metals is promoted. Therefore, an insufficient joining can be prevented from being caused.

The outer peripheral surface of the rotary tool F may slightly come into contact with the second metal member 2, but in this embodiment, the rotary tool F and the second metal member 2 are set not to come into contact with each other. Therefore, the first metal member 1 and the second metal member 2 are prevented from being mixed and stirred between them, so that excessive burrs V are prevented from being generated and an insufficient joining is more certainly prevented from being caused.

Since ends of the first metal member 1 and the second metal member 2 are provided with the first inclined surface 1a and the second inclined surface 2a, according to the present invention, a contacting area of the butting interface J can be enlarged relative to a case where the butting interface (butting surfaces) is in parallel with the vertical axis C. Thus, a joining strength can be enhanced.

Note that, in this embodiment, the inclination angle α (refer to Figure 1A) of the outer peripheral surface of the stirring pin F2 and the inclination angle β (refer to Figure 2B) of the butting interface J are the same as each other. The inclination angle α and the inclination angle β may be set to be different from each other, but if both the angles are set to be the same as each other, setting a distance between the rotary tool F and the second metal member 2 becomes easy. That is, a work becomes easy in which the outer peripheral surface of the rotary tool F and the second metal member 2 are set to be brought very close to each other while they does not come into contact with each other.

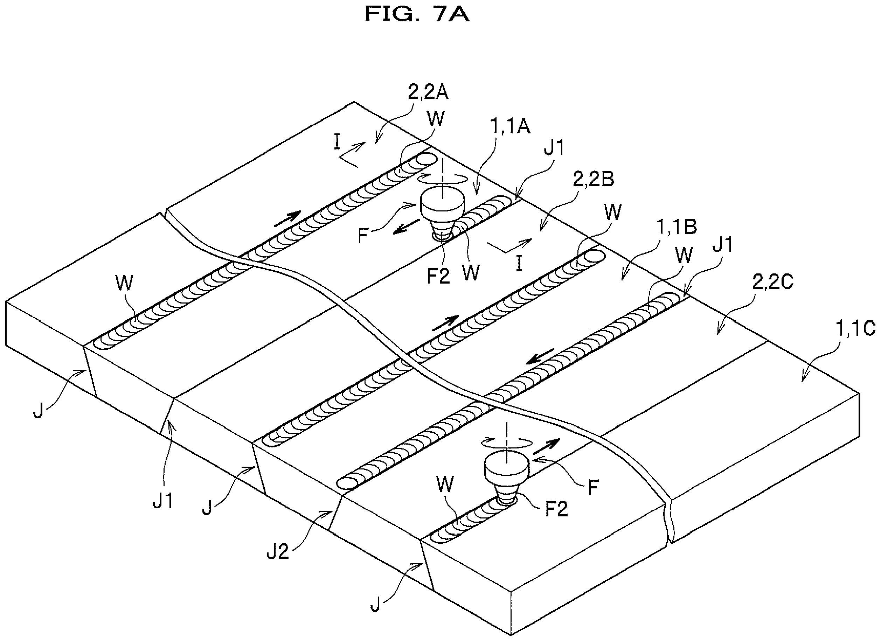

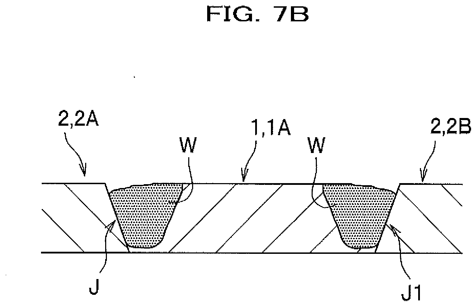

Next, a modified embodiment will be explained. Figure 7A is a perspective view showing a joining step according to the modified embodiment, and Figure 7B is a cross sectional view taken along the line I-I of Figure 7A. As shown in Figure 7A, in a butting step according to the modified embodiment, a plurality of pairs (in Figure 7A, three pairs), which pair consists of a first metal member 1 and a second metal member 2, are arranged in a row, and these members are secured to each other by using the clamp disposed on the work table not to move.

In this modified embodiment, a first pair consisting of a first metal member 1A and a second metal member 2A, a second pair consisting of a first metal member 1B and a second metal member 2B, and a third pair consisting of a first metal member 1C and a second metal member 2C are arranged in a row. Butting interfaces J of the first, second and third pairs are arranged so that they are in parallel with each other.

Furthermore, in this modified embodiment, adjacent pairs are butted against each other so that butting interfaces between the adjacent pairs are also inclined. That is, they are butted against each other so that a butting interface J1 and a butting interface J2 are inclined. The butting interface J1 is formed by butting the first metal member 1A and the second metal member 2B against each other, and the butting interface J2 is formed by butting the first metal member 1B and the second metal member 2C against each other. Each inclination angle (inclination angle with respect to a vertical axis) of the butting interfaces J1 and J2 is set to be - 20 degrees. The inclination angles of the butting interfaces J1 and J2 are opposite to those of the butting interfaces J. The butting interfaces J1 and J2 are in parallel with each other.

In a joining step, friction stirring is performed by using the rotary tool F to join each butting interface J in the same manner as the aforesaid embodiment. Furthermore, in the joining step, friction stirring is performed by using the rotary tool F also for the butting interfaces J1 and J2 in the same manner as the aforesaid embodiment.

That is, in the joining step according to the modified embodiment, the rotary tool F rotating in the clockwise direction is inserted into a position which is near the butting interface J1 and on a back side (back side area in Figure 7A) of an upper surface of the first metal member 1A, and is moved to this side of the first metal member 1A along the butting interface J1. In other word, a rotational direction and a moving direction of the rotary tool F are set so that a region of the butting interface J1, which region is near the second metal member 2B, is a shear side region. Also for the butting interface J2, friction stirring is performed in the same manner as the butting interface J1. As shown in Figures 7A and 7B, in this modified embodiment, a plasticized region W is not formed in the second metal members 2 (2A, 2B, 2C), but plasticized regions W are formed only in the first metal members 1 (1A, 1B, 1C).

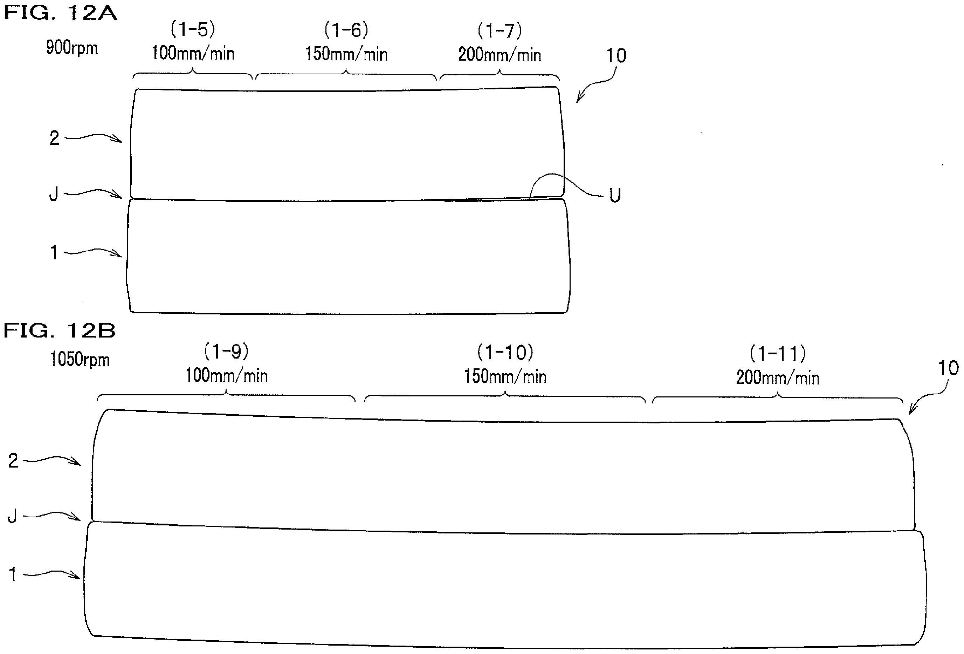

According to the present invention, the first metal member 1 made of an aluminum alloy and the second metal member 2 made of copper are rolled, the first metal member 1 is more largely deformed than the other since the hardness of the aluminum alloy member is lower than that of the copper member. Accordingly, the composite rolled material obtained by the rolling step is curved in an arched shape in a plan view so that the first metal member 1 is deformed outside and the second metal member 2 is deformed inside (refer to Figures 12A and 12B).

However, since adjacent pairs of metal members are arranged in a row and secured so that they are not moved by the joining step according to the modified embodiment, each metal member can be restrained from being deformed in an arc shape in a plan view. Furthermore, the manufacturing cycle can be speeded up since friction stirring can be continuously performed for the plural butting interfaces J, J1, J2 only with one clamping work.

### <EXAMPLE>

Next, an example will be described. In the example, the first metal member 1 was made of A1050 (JIS), and the second metal member 2 was made of Cu1020 (JIS). A couple of the first metal member 1 and the second metal member 2 were set to have the same thickness equal to 10 mm and the same width equal to 60 mm. And an outer diameter of the front end of the rotary tool F was set to be 4 mm. Both of the inclination angle α (refer to Figure 1A) of the outer peripheral surface of the stirring pin F2 and the inclination angle β (refer to Figure 2B) of the butting interface J were set to be 20 degrees.

The aluminum alloy A1050 has components of Si equal to or less than 0.25 %, Fe equal to or less than 0.40 %, Cu equal to or less than 0.05 %, Mn equal to or less than 0.05 %, Mg equal to or less than 0.05 %, Zn equal to or less than 0.05 %, V equal to or less than 0.05 %, Ti equal to or less than 0.03 %, Al equal to or more than 99.50 %, and the others each of which is equal to or less than 0.03 %.

The copper Cu1020 has a component of Cu equal to or more than 99.96 %.

### <Test 1>

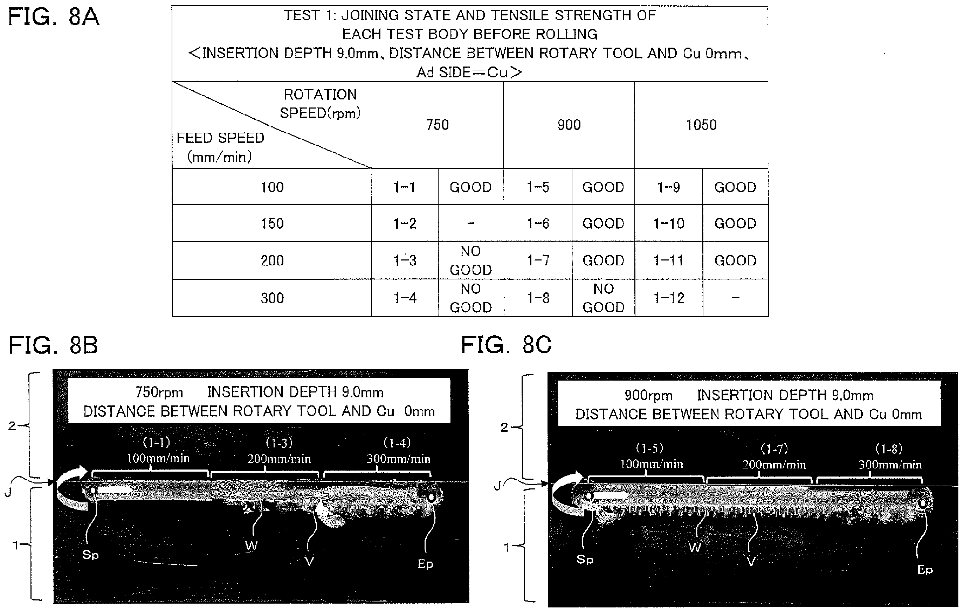

As shown in Figure 8A, in the test 1, tests were done to check influence of a feed speed and a rotation speed of the rotary tool F in the joining step.

In the test 1, an insertion depth of the rotary tool F was set to be 9.0 mm, a distance between the rotary tool F and the second metal member 2 was set to be 0 mm, the second metal member 2 side was set to be a shear side (Ad side), and a feed speed and a rotation speed were set as parameters. The rotary tool F was set to be rotated in the clockwise direction. Note that, "a distance between the rotary tool F and the second metal member 2" is a distance between the outer peripheral surface of the stirring pin F2 and the second inclined surface 2a of the second metal member 2. In the case where the distance between the rotary tool F and the second metal member 2 is 0 mm, it is considered that the outer peripheral surface of the rotary tool F and the second inclined surface of the second metal member 2 are not in contact with each other in this example.

The feed speed of the rotary tool F was set to be 100, 150, 200, 300 mm/min. The rotation speed of the rotary tool F was set to be 750, 900, 1050 rpm. As shown in Figures 8B and 8C, in the joining step, after the rotary tool F was inserted at the starting position Sp and relatively moved, the rotary tool F was pulled out at an end position Ep. Furthermore, in the joining step, the rotation speed was set to be constant for a pair of the first metal member 1 and the second metal member 2, and the feed speed was appropriately changed during one path. Thus, respective test bodies were made.

A joining state in a plan view and in a cross sectional view showing a macro-texture was observed for each of the test bodies 1-1 to 1-12 which were made. In the observations, in a case where the depth of the recessed portion Q was equal to or less than 1.5 mm (equal to or less than 15 % of the thickness of the metal member), the judgment was set to be "good", and in a case where the depth of the recessed portion Q was more than 1.5 mm, the judgment was set to be "no good".

As shown in Figure 8B, the recessed portion Q was minute and almost no burrs were generated in the test body 1-1, so that the joining state was "good". On the other hand, in the test bodies 1-3, 1-4, the recessed portion Q became large and many burrs V were generated. Thus, each joining state was "no good". The burrs V in the test bodies 1-3, 1-4 were generated on the first metal member 1 side, and almost no burrs were generated on the second metal member 2 side.

AS shown in Figure 8C, a recessed portion Q was hardly generated in the test bodies 1-5, 1-7, and burrs V were generated in a small amount, so that each joining state was "good". On the other hand, in the test body 1-8, the recessed portion Q became large and many burrs V were generated, so that the joining state was "no good". In a case where the rotation speed of the rotary tool F was constant, it was understood that the joining state in the case of a low feed speed was better than that of a high feed speed. Note that, burrs V in the test bodies 1-5, 1-7, 1-8 were generated on the first metal member 1 side, and almost no burrs were generated on the second metal member 2 side.

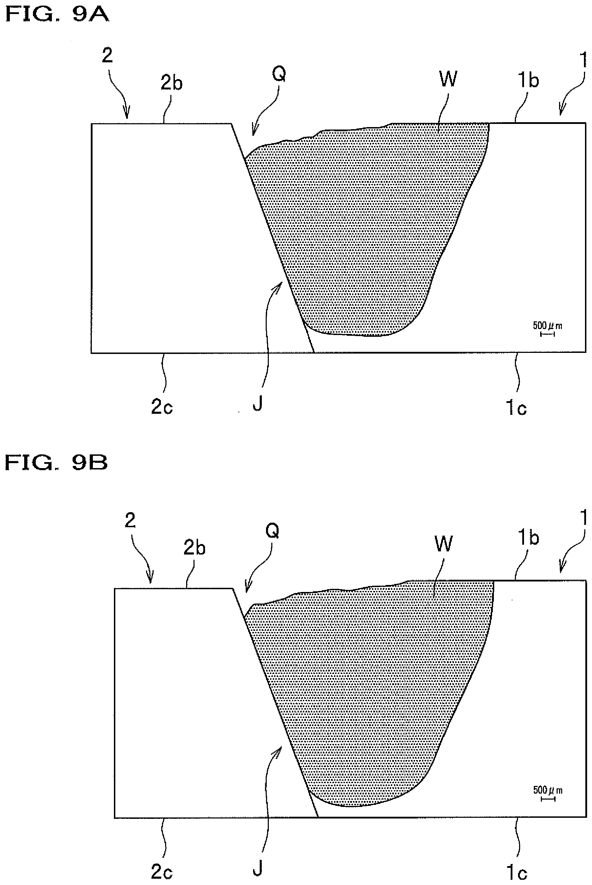

Figures 9A and 9B are cross sectional views after finishing the joining step in the test 1, and Figure 9A shows the test body 1-7 and Figure 9B shows the test body 1-11. A recessed portion Q in the test body 1-11, which was made at 1050 rpm of the rotation speed of the rotary tool F, shown in Figure 9B was smaller than a recessed portion Q in the test body 1-7, which was made at 900 rpm of the rotation speed of the rotary tool F, shown in Figure 9A. In the case where the feed speed of the rotary tool F was constant, it was understood that the joining state in the case of a high rotation speed was better than that of a low rotation speed.

Furthermore, tensile test pieces (length is 100 mm, width is 20 mm) were made, which pieces were made by cutting each test body in a direction orthogonal to a joining direction (plasticized region W) . A tensile strength of each test body was measured. The tensile strength of the test body 1-5, for which the feed speed of the rotary tool F had been 100 mm/min, was 79 MPa. The tensile strength of the test body 1-7, for which the feed speed of the rotary tool F had been 200 mm/min, was 45 MPa. It was understood that in the case where the rotation speed of the rotary tool F was constant, the tensile strength in a case of a lower feed speed was higher.

A specific illustration is omitted. Deposition amount of an aluminum alloy on a fracture surface of the second metal member 2 side (copper member side) in a fracture surface of the first metal member 1 and the second metal surface 2 after the measurement of the tensile strength was observed. As a result of the observation, it was understood that an aluminum alloy was attached onto a fracture surface of the test body 1-5 more than a fracture surface of the test body 1-7. An aluminum alloy was much attached onto the second metal member 2 side in the test body 1-5 for which a low feed speed of the rotary tool F had been adopted. Thus, it was understood that an amount of input-heat had been large at the joining, so that a mutual diffusion of Al and Cu on the butting interface J had been promoted.

Summarizing the above, it was understood in the test 1 that the joining state was better in the case of a lower feed speed of the rotary tool F and a higher rotation speed of the rotary tool F in the state where the rotary tool F was not contact with the second metal member 2. In other words, it was understood that the joining state was better as an amount of input-heat into each metal member was larger.

### <Test 2>

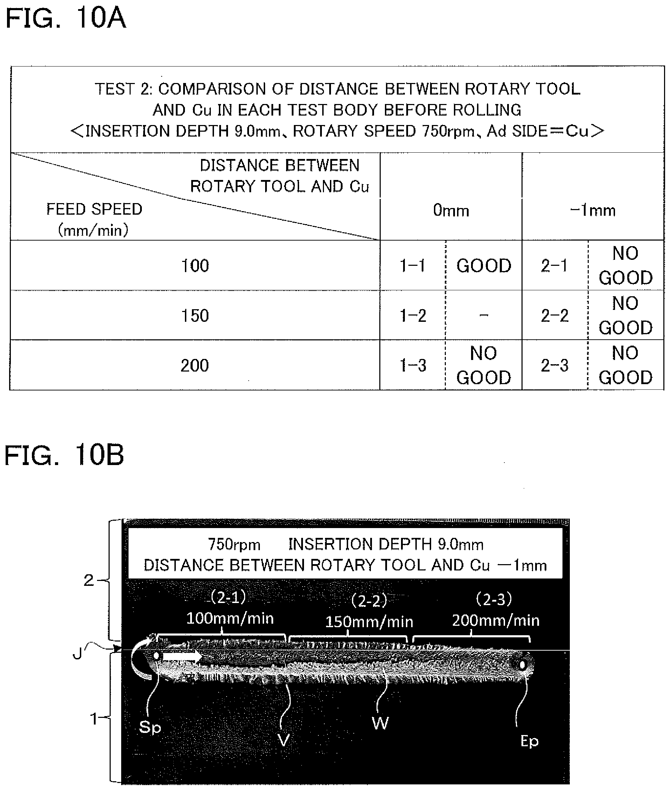

As shown in Figure 10A, in the test 2, tests were done to check influence of a distance between the rotary tool F and the second metal member 2 in the joining step.

In the test 2, test bodies 2-1, 2-2 and 2-3 were made. In these tests, an insertion depth of the rotary tool F was set to be 9.0 mm, the rotation speed was set to be 750 rpm, a shear side (Ad side) was set to be the second metal member 2 side, and a feed speed and a distance between the rotary tool F and the second metal member 2 were set as parameters. The rotary tool F was set to be rotated in the clockwise direction.

In the test 2, the feed speed of the rotary tool F was set to be 100, 150, 200 mm/min, and the distance between the rotary tool F and the second metal member 2 was set to be 0 mm, -1 mm. "The distance between the rotary tool F and the second metal member 2 is -1 mm" means that an overlapping size between the second metal member 2 and the outer peripheral surface of the rotary tool F is 1 mm.

As shown in Figure 10A, in the case where the distance between the rotary tool F and the second metal member 2 was 0 mm, the joining state of the test body 1-1 was "good", for which body the feed speed of the rotary tool F had been 100 mm/min. On the other hand, in the case where the distance between the rotary tool F and the second metal member 2 was -1 mm, it was understood that the joining state was "no good" in the range of 100 to 200 mm/min of the feed speed of the rotary tool F. In the test body 1-1 shown in Figure 8B, a noticeable groove was not found on a surface of the plasticized region W, but in the test body 2-1 shown in Figure 10B, a large groove was made in the middle of a plasticized region W of the test body 2-1, and many burrs were generated on both sides of the plasticized region W. That is, it was understood that a joining state in the case where the outer peripheral surface of the rotary tool F was inserted into the second metal member 2 by 1 mm was not good. Furthermore, as shown in Figure 10B, it was understood that the groove became larger as the feed speed of the rotary tool F was lower (an amount of input-heat was larger).

In the case where the rotary tool F is inserted into the second metal member 2 by 1 mm, the second metal member 2 (copper member) is stirred and mixed in the first metal member 1 (aluminum alloy member). An area of the boundary face of the Al/Cu increases, and a mutual diffusion of the Al/Cu is promoted, so that the melting temperature of the dispersed Al-Cu phase becomes low to be a liquid phase, and many burrs are generated on the aluminum alloy member side. Accordingly, a joining state is not good.

### <Test 3>

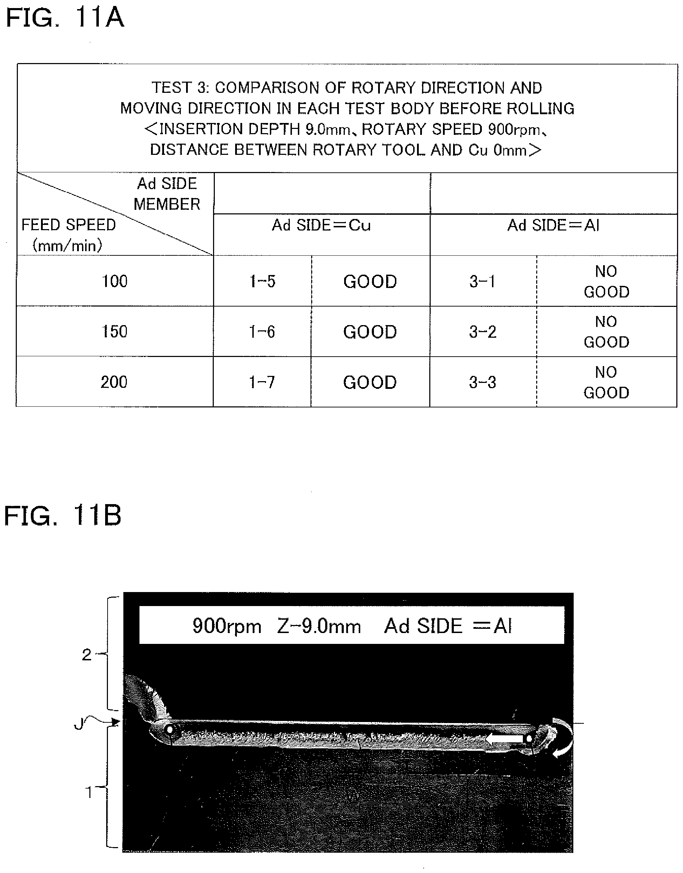

As shown in Figure 11A, in the test 3, tests were done to check influence of a shear side and a flow side with respect to the rotary tool F in the joining step.

In the test 3, test bodies 3-1, 3-2, and 3-3 were made. In these tests, an insertion depth of the rotary tool F was set to be 9.0 mm, a rotation speed was set to be 900 rpm, a distance between the rotary tool F and the second metal member 2 was set to be 0 mm, and a feed speed of the rotary tool F was handled as a parameter. The rotary tool F was set to be rotated in the clockwise direction.

In the test 3, feed speeds of the rotary tool F were set to be 100, 150, 200 mm/min. As shown in Figure 11B, in the test bodies 3-1, 3-2 and 3-3, the second metal member 2 side was set to be a flow (Re) side with respect to the rotary tool F (the first metal member 1 side was set to be a shear (Ad) side). In the test bodies 3-1, 3-2 and 3-3, the rotary tool F was disposed so that the second metal member 2 was positioned on a right side with respect to a moving direction of the tool F, while the rotary tool F was rotated in the clockwise direction, and friction stirring was performed in a similar manner as described above.

As shown by the test bodies 1-5, 1-6, 1-7 in Figure 11A, in the case where the second metal member 2 side was set to be a shear (Ad) side with respect to the rotary tool F, the joining state was "good" in the range of 100 to 200 mm/min of a feed speed of the rotary tool F. A groove was not found in the plasticized region W also by viewing the test bodies 1-5 and 1-7 in Figure 8C. Thus, by setting the second metal member 2 side to be a shear side, which second metal member has a high melting temperature, the temperature of the boundary face between the first metal member 1 and the second metal member 2 can be kept relatively high, so that an insufficient joining can be prevented from being caused.

On the other hand, as shown by the test bodies 3-1, 3-2, 3-3 in Figure 11B, for which the second metal member 2 side with respect to the rotary tool F was set to be a flow (Re) side (the first metal member 1 side with respect to the rotary tool was set to be a shear (Ad) side), the joining state was "no good". It was understood that large grooves were made on the butting interface J side of the plasticized region W of the test bodies 3-1, 3-2, 3-3 as shown in Figure 11B. Thus, by setting the second metal member 2 side of the plasticized region W to be a flow side, which second metal member has a high melting temperature, the temperature of the boundary face between the first metal member 1 and the second metal member 2 becomes low. Consequently, a mutual diffusion through the boundary face between different metals is not promoted. Therefore, there exists a risk that an insufficient joining is caused. On the other hand, since an amount of input-heat of the shear side which is the first metal member 1 side, the first metal member having a low melting temperature, is larger than that of the flow side and the shear side is not in contact with the second metal member 2 (Cu) having a good heat conductivity, a friction heat cannot be radiated and excessive burrs are generated. Therefore, a joining defect is caused.

### <Test 4>

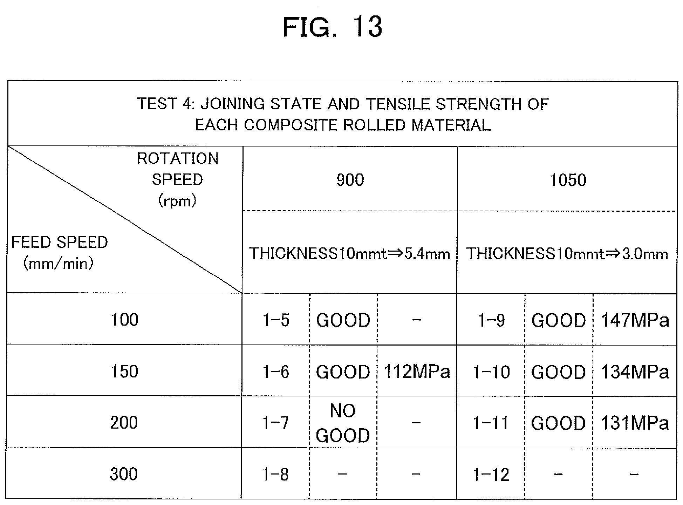

As shown in Figures 12A, 12B and 13, in the test 4, tests were done to check a joining state and a tensile strength of a composite rolled material 10 formed in the rolling step.

In the test 4, cold rolling was performed to the test bodies 1-5, 1-6, 1-7 and the test bodies 1-9, 1-10, 1-11, then a joining state of each test body in a plan view was observed, and a tensile strength of each test body was measured. In the rolling step, the first metal member 1 and the second metal member 2 which were joined together were rolled by a rolling apparatus in a plurality of times to be gradually thinned. In the rolling step, in a case of an occurrence of a crack at the butting interface J, the judgment was "no good", and in a case of no occurrence of a crack, the judgment was "good".

As shown in Figure 12A, in the test bodies 1-5, 1-6, 1-7, a crack U occurred in the test body 1-7 when the thickness became 5.4 mm (reduction rate was 46 %). On the other hand, as shown in Figure 13B, in the test bodies 1-9, 1-10, 1-11, even when the thickness became 3.0 mm (reduction rate was 70 %), a crack did not occur in each test body. Furthermore, as shown in Figures 12A and 12B, since the first metal member 1 and the second metal member 2 are made of metals different from each other, they are different from each other in hardness. In this example, the first metal member 1 (aluminum alloy member) is largely deformed more than the second metal member (cupper member) since the former is lower in hardness than the latter. Consequently, the composite rolled material 10 came to have an arc shape in a plan view in which the second metal member 2 was deformed inside and the first metal member 1 was deformed outside.

Furthermore, tensile test pieces (each length is 100 mm; each width is 20 mm) were made by cutting each test body in a direction orthogonal to the joining direction (plasticized regions W), and a tensile strength of each test piece was measured. As shown in Figure 13, the tensile strength of the test piece 1-6 was 112 MPa, that of the test piece 1-9 was 147 MPa, and that of the test piece 1-10 was 134 MPa. These results show the same tendency as the results of the test 1 in which only a joining step was performed. Also in the composite rolled material 10 to which the rolling step was performed, it was understood that a tensile strength was larger as an amount of input-heat at the time of joining step was larger.

A specific illustration is omitted, but by observation of fracture surfaces of the first metal member 1 and the second metal member 2 after the tensile strengths were measured, it was observed that an amount of an aluminum alloy adhered to the fracture surface of the second metal member 2 (copper member) side was the most on the test piece 1-9 and the least on the test piece 1-11, among the test pieces 1-9, 1-10, 1-11. The amount of an aluminum alloy adhered to the second metal member 2 side was more on a test piece which had a more amount of input-heat at the time of joining, accordingly it can be considered that a mutual diffusion of Al and Cu on the butting interface J was promoted.

### DESCRIPTION OF THE SYMBOLS

- 1: First metal member
- 2: Second metal member
- 10: Composite rolled material
- F: Rotary tool
- F1: Coupling part
- F2: Stirring pin
- F3: Spiral groove
- W: Plasticized region

## Claims

1. A method of joining a first metal member (1) and a second metal member (2) made of different materials by using a rotary tool (F) provided with a stirring pin (F2) having a diameter becoming smaller toward an extremity of the stirring pin (F2), wherein the first metal member (1) is made of aluminum or an aluminum alloy, and the second metal member (2) is made of copper or a copper alloy, the method being **characterized by** the following steps:
a preparatory step of preparing
the first metal member (1) having a first upper surface (1b), a first lower surface (1c), and a first inclined surface (1a) connecting the first upper surface (1b) and the first lower surface (1c), and
the second metal member (2) having a second upper surface (2b), a second lower surface (2c), and a second inclined surface (2a) connecting the second upper surface (2b) and the second lower surface (2c), the second metal member (2) having a higher melting temperature than the first metal member (1);
a butting step of forming a butting interface (J) by butting the first inclined surface (1a) and the second inclined surface (2a) against each other in such a manner that a first upper intersecting line (1d) formed by the first upper surface (1b) and the first inclined surface (1a) is positioned further in a direction of the second metal member (2) than a first lower intersecting line (1e) formed by the first lower surface (1c) and the first inclined surface (1a), and a second lower intersecting line (2e) formed by the second lower surface (2c) and the second inclined surface (2a) is positioned further in a direction of the first metal member (1) than a second upper intersecting line (2d) formed by the second upper surface (2b) and the second inclined surface (2a); and
a joining step of joining the first metal member (1) and the second metal member (2),
wherein in the joining step, the first metal member (1) and the second metal member (2) are joined by moving the rotary tool (F) along the butting interface (J) while the rotary tool (F) being rotated is inserted into the first metal member (1) from only the first upper surface (1b) and only the stirring pin (F2) is in contact with only the first metal member (1), and
a rotational direction and a moving direction of the rotary tool (F) are set so that a second metal member (2) side of a plasticized region (W) to be formed along a moving locus of the rotary tool (F) is a shear side, and a first metal member (1) side of the plasticized region (W) is a flow side, wherein the shear side is a side where a relative speed of the outer peripheral surface of the rotary tool (F) to the joining portion is a speed obtained by adding a feed speed and a tangential speed of the outer peripheral surface of the rotary tool (F), and wherein the flow side is a side where a relative speed of the outer peripheral surface of the rotary tool (F) to the joining portion is a speed obtained by subtracting the feed speed and the tangential speed of the outer peripheral surface of the rotary tool (F) .

2. The method according to claim 1, wherein the rotary tool (F) is rotated in a clockwise direction in a case where the rotary tool (F) has a spiral groove (F3) on an outer peripheral surface thereof, which spiral groove (F3) is formed spirally in a counterclockwise direction from the base end toward the front end, and is rotated in the counterclockwise direction in a case where the rotary tool (F) has a spiral groove (F3) on the outer peripheral surface thereof, which spiral groove (F3) is formed spirally in the clockwise direction from the base end toward the front end.

3. The method according to any one of the previous claims, comprising:
a rolling step of rolling the metal members (1, 2) joined in the joining step in a rolling direction which is a direction of a joining line, for manufacturing a composite rolled material formed of a pair of the metal members (1, 2) made of different materials.

## Patentansprüche

1. Verfahren zum Verbinden eines ersten Metallelements (1) und eines zweiten Metallelements (2), die aus unterschiedlichen Materialien hergestellt sind, unter Verwendung eines Rotationswerkzeugs (F), das mit einem Rührstift (F2) versehen ist, dessen Durchmesser zu einem Ende des Rührstifts (F2) hin kleiner wird, wobei das erste Metallelement (1) aus Aluminium oder einer Aluminiumlegierung hergestellt ist und das zweite Metallelement (2) aus Kupfer oder einer Kupferlegierung hergestellt ist,
wobei das Verfahren durch die folgenden Schritte gekennzeichnet ist:
einen vorbereitenden Schritt zur Vorbereitung
des ersten Metallelements (1) mit einer ersten oberen Fläche (1b), einer ersten unteren Fläche (1c) und einer ersten geneigten Fläche (1a), welche die erste obere Fläche (1b) und die erste untere Fläche (1c) miteinander verbindet, und
des zweiten Metallelements (2) mit einer zweiten oberen Fläche (2b), einer zweiten unteren Fläche (2c) und einer zweiten geneigten Fläche (2a), welche die zweite obere Fläche (2b) und die zweite untere Fläche (2c) miteinander verbindet, wobei das zweite Metallelement (2) eine höhere Schmelztemperatur als das erste Metallelement (1) hat;
einen Stoßschritt zum Bilden einer Stoßfläche (J) durch Aneinanderstoßen der ersten geneigten Fläche (1a) und der zweiten geneigten Fläche (2a) dergestalt, dass eine erste obere Schnittlinie (1d), die durch die erste obere Fläche (1b) und die erste geneigte Fläche (1a) gebildet wird, weiter in einer Richtung des zweiten Metallelements (2) positioniert ist als eine erste untere Schnittlinie (1e), die durch die erste untere Fläche (1c) und die erste geneigte Fläche (1a) gebildet wird, und dass eine zweite untere Schnittlinie (2e), die durch die zweite untere Fläche (2c) und die zweite geneigte Fläche (2a) gebildet wird, weiter in einer Richtung des ersten Metallelements (1) positioniert ist als eine zweite obere Schnittlinie (2d), die durch die zweite obere Fläche (2b) und die zweite geneigte Fläche (2a) gebildet wird, und
einen Verbindungsschritt zum Verbinden des ersten Metallelements (1) und des zweiten Metallelements (2),
wobei in dem Verbindungsschritt das erste Metallelement (1) und das zweite Metallelement (2) verbunden werden, indem das Rotationswerkzeug (F) entlang der Stoßfläche (J) bewegt wird, während das sich drehende Rotationswerkzeug (F) nur von der ersten oberen Fläche (1b) aus in das erste Metallelement (1) eingeführt wird und nur der Rührstift (F2) ausschließlich mit dem ersten Metallelement (1) in Kontakt ist, und
eine Drehrichtung und eine Bewegungsrichtung des Rotationswerkzeugs (F) so eingestellt sind, dass eine dem zweiten Metallelement (2) zugewandte Seite eines plastifizierten Bereichs (W), der entlang eines Bewegungsorts des Rotationswerkzeugs (F) zu bilden ist, eine Scherseite ist und eine dem ersten Metallelement (1) zugewandte Seite des plastifizierten Bereichs (W) eine Fließseite ist,
wobei die Scherseite eine Seite ist, auf der eine Relativgeschwindigkeit der Außenumfangsfläche des Rotationswerkzeugs (F) im Verhältnis zum Verbindungsabschnitt eine Geschwindigkeit ist, die durch Addieren einer Vorschubgeschwindigkeit und einer Tangentialgeschwindigkeit der Außenumfangsfläche des Rotationswerkzeugs (F) erhalten wird, und wobei die Fließseite eine Seite ist, auf der eine Relativgeschwindigkeit der Außenumfangsfläche des Rotationswerkzeugs (F) im Verhältnis zum Verbindungsabschnitt eine Geschwindigkeit ist, die durch Subtrahieren der Vorschubgeschwindigkeit von der Tangentialgeschwindigkeit der Außenumfangsfläche des Rotationswerkzeugs (F) erhalten wird.

2. Verfahren nach Anspruch 1, wobei das Rotationswerkzeug (F) im Uhrzeigersinn gedreht wird, wenn es auf einer Außenumfangsfläche eine Spiralnut (F3) aufweist, die in einer Richtung entgegen dem Uhrzeigersinn vom Basisende zum vorderen Ende hin spiralförmig ausgebildet ist, und gegen den Uhrzeigersinn gedreht wird, wenn es auf seiner Außenumfangsfläche eine Spiralnut (F3) aufweist, die im Uhrzeigersinn vom Basisende zum vorderen Ende hin spiralförmig ausgebildet ist.

3. Verfahren nach einem der vorhergehenden Ansprüche, umfassend:
einen Walzschritt des Walzens der im Verbindungsschritt verbundenen Metallelemente (1, 2) in einer Walzrichtung, die eine Richtung einer Verbindungslinie ist, zur Herstellung eines gewalzten Verbundmaterials, das aus einem Paar der aus verschiedenen Materialien hergestellten Metallelemente (1, 2) gebildet ist.

## Revendications

1. Procédé de jonction d'un premier organe métallique (1) et d'un second organe métallique (2) réalisés en matériaux différents en utilisant un outil rotatif (F) pourvu d'une clavette d'agitation (F2) ayant un diamètre se rétrécissant vers une extrémité de la clavette d'agitation (F2), dans lequel le premier organe métallique (1) est réalisé en aluminium ou en un alliage d'aluminium, et le second organe métallique (2) est réalisé en cuivre ou en un alliage de cuivre,
le procédé étant **caractérisé par** les étapes suivantes:
une étape préparatoire consistant à préparer
le premier organe métallique (1) ayant une première surface supérieure (1b), une première surface inférieure (1c), et une première surface inclinée (1a) reliant la première surface supérieure (1b) et la première surface inférieure (1c), et
le second organe métallique (2) ayant une seconde surface supérieure (2b), une seconde surface inférieure (2c), et une seconde surface inclinée (2a) reliant la seconde surface supérieure (2b) et la seconde surface inférieure (2c), le second organe métallique (2) ayant une température de fusion plus élevée que le premier organe métallique (1) ;
une étape d'aboutement consistant à former une interface d'aboutement (J) par aboutement de la première surface inclinée (1a) et de la seconde surface inclinée (2a) l'une contre l'autre de manière à ce qu'une première ligne d'intersection supérieure (1d) formée par la première surface supérieure (1 b) et la première surface inclinée (1a) soit positionnée davantage dans une direction du second organe métallique (2) qu'une première ligne d'intersection inférieure (1e) formée par la première surface inférieure (1c) et la première surface inclinée (1a), et qu'une seconde ligne d'intersection inférieure (2e) formée par la seconde surface inférieure (2c) et la seconde surface inclinée (2a) soit positionnée davantage dans une direction du premier organe métallique (1) qu'une seconde ligne d'intersection supérieure (2d) formée par la seconde surface supérieure (2b) et la seconde surface inclinée (2a) ; et
une étape de jonction consistant à joindre le premier organe métallique (1) et le second organe métallique (2),
dans lequel, à l'étape de jonction, le premier organe métallique (1) et le second organe métallique (2) sont joints par déplacement de l'outil rotatif (F) le long de l'interface d'aboutement (J) tandis que l'outil rotatif (F) en cours de rotation est inséré dans le premier organe métallique (1) uniquement depuis la première surface supérieure (1b) et uniquement la clavette d'agitation (F2) est en contact avec uniquement le premier organe métallique (1), et
une direction de rotation et une direction de déplacement de l'outil rotatif (F) sont fixées de sorte qu'un côté du second organe métallique (2) d'une région plastifiée (W) à former le long d'un lieu de déplacement de l'outil rotatif (F) soit un côté de cisaillement, et un côté du premier organe métallique (1) de la région plastifiée (W) soit un côté d'écoulement, dans lequel le côté de cisaillement est un côté où une vitesse relative de la surface périphérique extérieure de l'outil rotatif (F) jusqu'à la portion de jonction est une vitesse obtenue par addition d'une vitesse d'apport et d'une vitesse tangentielle de la surface périphérique extérieure de l'outil rotatif (F), et dans lequel le côté d'écoulement est un côté où une vitesse relative de la surface périphérique extérieure de l'outil rotatif (F) jusqu'à la portion de jonction est une vitesse obtenue par soustraction de la vitesse d'apport depuis la vitesse tangentielle de la surface périphérique extérieure de l'outil rotatif (F).

2. Procédé selon la revendication 1, dans lequel l'outil rotatif (F) est mis en rotation dans un sens horaire dans un cas où l'outil rotatif (F) a une rainure en spirale (F3) sur une surface périphérique extérieure de celui-ci, laquelle rainure en spirale (F3) est formée en spirale dans un sens antihoraire depuis l'extrémité de base vers l'extrémité avant, et est mis en rotation dans le sens antihoraire dans un cas où l'outil rotatif (F) a une rainure en spirale (F3) sur la surface périphérique extérieure de celui-ci, laquelle rainure en spirale (F3) est formée en spirale dans le sens horaire depuis l'extrémité de base vers l'extrémité avant.

3. Procédé selon l'une quelconque des revendications précédentes, comprenant:
une étape de laminage consistant à laminer des organes métalliques (1, 2) joints à l'étape de jonction dans une direction de laminage qui est une direction d'une ligne de jonction, pour fabriquer un matériau laminé composite formé d'une paire des organes métalliques (1, 2) réalisés en matériaux différents.
